Europäisches Patentamt

European Patent Office

Office européen des brevets

(11) Veröffentlichungsnummer: **0 050 875**
**B1**

(19)

# EUROPÄISCHE PATENTSCHRIFT

(12)

(45) Veröffentlichungstag der Patentschrift:
20.07.83

(21) Anmeldenummer: 81109061.2

(22) Anmeldetag: 28.10.81

(51) Int. Cl.³: **C 04 B 35/64,** B 22 F 3/04,
B 22 F 3/14, C 04 B 35/58

(54) Verfahren zur Herstellung von praktisch porenfreien polykristallinen Formkörpern durch isostatisches Heisspressen in Glashüllen.

(30) Priorität: 29.10.80 DE 3040771

(43) Veröffentlichungstag der Anmeldung:
05.05.82 Patentblatt 82/18

(45) Bekanntmachung des Hinweises auf die Patenterteilung:
20.07.83 Patentblatt 83/29

(84) Benannte Vertragsstaaten:
AT BE CH DE FR GB IT LI NL SE

(56) Entgegenhaltungen:
DE-A-2 601 294
DE-A-2 950 158
DE-A-3 009 240
DE-B-2 327 273
DE-B-2 737 208
GB-A-1 488 762
GB-A-2 018 296
GB-A-2 062 011
US-A-4 112 143

(73) Patentinhaber: Elektroschmelzwerk Kempten GmbH,
Herzog-Wilhelm-Strasse 16, D-8000 München 2 (DE)

(72) Erfinder: Hunold, Klaus, Dr. Dipl.-Chem., Hirschdorfer
Weg 3, D-8960 Kempten (DE)
Erfinder: Reinmuth, Klaus, Dr. Dipl.-Chem., An der
Halde 21, D-8961 Durach (DE)
Erfinder: Lipp, Alfred, Dr. Dipl.-Chem.,
Bürgermeister-Singer-Strasse 15, D-8939 Bad
Wörishofen (DE)

Verfahren zur Herstellung von praktisch porenfreien polykristallinen Formkörpern durch isostatisches
Heisspressen in Glashüllen

Gegenstand der Erfindung ist ein Verfahren zur Herstellung von praktisch porenfreien Formkörpern aus polykristallinem Material, bei dem pulverförmige Werkstoffe per se oder aus diesen vorgeformte Körper, die zur Oberfläche offene Poren aufweisen, in einer vakuumdicht geschlossenen Hülle aus Glas im Hochdruckautoklaven unter Verwendung eines inerten Gases als Druckübertragungsmedium isostatisch heissgepresst werden.

Es ist bekannt, dass vorgeformte Körper aus pulverförmigen Werkstoffen durch isostatisches Heisspressen hoch- bzw. nachverdichtet werden können unter Erzielung von praktisch porenfreien polykristallinen Formkörpern, deren Dichte bis zu 100% der theoretischen Dichte erreichen kann.

Werden die pulverförmigen Werkstoffe per se oder daraus vorgeformte Körper mit offener Porosität, das heisst mit zur Oberfläche offenen Poren, dem isostatischen Heisspressvorgang unterzogen, ist es notwendig, diese mit einer gasdichten Hülle zu versehen, um zu verhindern, dass das als Druckübertragungsmedium verwendete Gas eindringt und die Verdichtung stört.

Für diesen Zweck wurde die sogenannte Glaskapseltechnik entwickelt. Dabei werden beispielsweise pulverförmige Werkstoffe per se in vorgefertigten Glaskapseln oder -behältern untergebracht, deren innere Abmessungen etwa der gewünschten Form des fertigen Formkörpers entsprechen, wobei sich die Auswahl des Glases nach der zur Verdichtung der Pulver erforderlichen Temperatur richtet. Die mit dem Pulver gefüllten Glasbehälter werden evakuiert und gasdicht verschlossen. Dann können die abgedichteten Behälter in ein heisses geschmolzenes Salzbad eingesetzt werden, nachdem sie zur Schockverminderung bis zum Formänderungspunkt vorgewärmt worden sind und anschliessend werden sie unter Druck auf die erforderliche Temperatur erhitzt, bei der das Pulver verdichtet und der Behälter weich wird (vgl. DE-PS 19 01 766, die der US-PS Re. 28,301 entspricht).

Vorgeformte Körper mit offenen Poren können ebenfalls in vorgefertigte Glaskapseln eingesetzt werden, die den Abmessungen des Körpers nicht genau angepasst sein müssen (vgl. DE-AS 23 46 499, die der GB-PS 14 41 330 entspricht und DE-OS 25 48 740, die der GB-PS 15 22 705 entspricht), wobei der Raum zwischen Galskapsel und vorgeformtem Körper zusätzlich mit einem Glaspulver ausgefüllt werden kann, das eine höhere Erweichungstemperatur hat als die Kapsel selbst (vgl. DE-AS 26 01 294, die der GB-PS 15 29 966 entspricht). Vor dem Einbringen in die isostatische Heisspresse werden die Kapseln mit Inhalt evakuiert und dann gasdicht verschlossen. Während des Aufheizvorgangs im Hochdruckautoklaven erweichen die Glaskapseln und das gegebenenfalls vorhandene Glaspulver und passen sich aufgrund des wirkenden Gasdruckes den Abmessungen des vorgeformten Körpers an.

Anstelle des Einbringens in vorgefertigte Glaskapseln können vorgeformte Körper direkt mit einer Glas- oder glasähnlichen Masse beschichtet werden, beispielsweise durch Flamm- oder Plasmaspritzen oder durch Eintauchen unter Bildung einer porösen Oberflächenschicht, die dann durch Erhitzen unter vermindertem Druck zu einer gasdichten Umhüllung geschmolzen wird (vgl. DE-AS 22 08 250, die der GB-PS 13 74 033 entspricht). Bei vorgeformten Körpern, die eine hohe Verdichtungstemperatur benötigen, muss die erzeugte Hülle aus einer hochschmelzenden glasartigen Masse bestehen, um zu verhindern, dass die Umhüllung vorzeitig abläuft oder in den Körper eindringt. Das hat aber den Nachteil, dass die Oberflächenschicht erst bei ziemlich hoher Temperatur gasdicht wird.

Für vorgeformte Körper, zum Beispiel aus Siliciumnitrid, die eine hohe Verdichtungstemperatur erfordern, ist daher ein Verfahren bekannt geworden, bei dem auf den vorgeformten Körper zwei poröse Schichten aufgetragen werden, wobei die innere, direkt auf den Körper aufgetragene Schicht aus einem hochschmelzenden glasbildenden Material und die äussere Schicht aus einem niedriger schmelzenden glasbildenden Material besteht. Durch Erhitzen unter vermindertem Druck wird zuerst die äussere Schicht gasdicht geschmolzen, dann erfolgt die Druckanwendung mit zunehmender Temperatur, so dass der Körper vor und während der erforderlichen Verdichtungstemperatur immer von einer gasdichten Hülle umschlossen ist (vgl. DE-OS 27 02 073, die der US-PS 41 12 143 entspricht).

Da aber offensichtlich durch derartige Glashülltechniken das dichte Umschliessen des vorgeformten Körpers nicht zustandekommt, sind ferner Versuche bekannt geworden, wonach ein Entweichen von Gasen aus dem Pulverkörper beim Bilden der Hülle verhindert wird, was durch Steuerung des Gasdrucks während der Umwandlung der gasdurchlässigen in die für das Druckmittel undurchlässige Hülle erreicht werden soll (vgl. DE-OS 29 15 831, die der GB-PA 20 24 256 entspricht und DE-OS 29 16 223, die der GB-PA 20 24 255 entspricht).

In allen Fällen der sogenannten Glaskapseltechnik, unabhängig davon, ob vorgefertigte Glaskapseln verwendet werden oder die Glashülle auf dem Körper erzeugt wird, bleibt dennoch stets die Gefahr des vorzeitigen Abfliessens der Glashülle, die durch die bekannten Massnahmen nicht behoben werden kann. Für Materialien, die hohe Verdichtungstemperaturen benötigen, das heisst, Temperaturen von > 1700°C, scheiden auch die Gläser mit den höchsten Erweichungstemperaturen, wie Kieselglas unter normalen Voraussetzungen als Hüllenmaterialen aus. Bei der Herstellung von sehr kleinen Formkörpern kann zwar bei hohen Temperaturen ein vollständiges Ablaufen der Glashülle durch den stützenden Effekt von bereits abgelaufenem Glas über längere Zeit verhindert werden, jedoch ist in diesem Fall der Formkörper an seinem oberen Ende nur noch mit einer dünnen Glashaut überzogen, während das untere Ende in eine dicke Glasschicht eingebettet ist, was eine gleichmässige Verdichtung verhindert. Bei grossen Formkörpern läuft indessen die Glashülle fast vollständig ab.

Der Erfindung liegt daher die Aufgabe zugrunde, ein Verfahren zur Herstellung von praktisch porenfreien, polykristallinen Formkörpern aus pulverförmigen Materialien oder aus vorgeformten Körpern mit zur Oberfläche offenen Poren, in einer vakuumdicht geschlossenen Glashülle durch isostatisches Heisspressen im Hochdruckautoklaven unter Verwendung eines inerten Gases als Druckübertragungsmedium zur Verfügung zu stellen, bei dem kein vorzeitiges Abfliessen der Glashülle auftreten kann.

Diese Aufgabe wird erfindungsgemäss dadurch gelöst, dass die glasgehüllten Pulver oder Körper mit einem für das gasförmige Druckübertragungsmedium durchlässigen, hitzebeständigen, pulverförmigen Material in Berührung gebracht werden, das beim Erweichen der Glashülle während des Aufheizvorgangs beim isostatischen Heisspressen in die Glasoberfläche eindringt oder mit dieser reagiert unter Versteifung der Glashülle von aussen bei der angewendeten Presstemperatur.

Bei dem erfindungsgemässen Verfahren wird demnach zur Verhinderung des Abfliessens der Glashülle bei geringer Viskosität die Hülle von aussen versteift oder gestützt, so dass die zu verdichtenden Pulver oder vorgeformten Körper während des gesamten Heisspressvorgangs von einer gleichmässig dicken Hüllschicht gasdicht umschlossen bleiben.

Mit Hife des erfindungsgemässen Verfahrens können pulverförmige Werkstoffe per se oder aus diesen vorgeformte Körper beliebiger Art und Zusammensetzung, wie Metalle, metallische und nicht metallische Hartstoffe, zum Beispiel Boride, Carbide, Nitride und/oder Silicide, gegebenenfalls zusammen mit bekannten Bindermetallen und/oder Sinterhilfsmitteln heissisostatisch verdichtet werden. Bei Einsatz vorgeformter Körper kann deren Formgebung mittels üblicher bekannter Massnahmen vorgenommen werden, beispielsweise durch Gesenkpressen, isostatisches Pressen, Spritzgiessen, Strangpressen oder Schlickergiessen bei Raumtemperatur oder bei erhöhter Temperatur, durch druckloses Sintern oder einfaches Heisspressen. Die Körper sollten nach der Formgebung eine theoretische Dichte von mindestens 50%, vorzugweise von mindestens 60% aufweisen.

Für die Glasumhüllung sind bei Einsatz pulverförmiger Werkstoffe per se vorgefertigte Glaskapseln erforderlich, wobei die Zusammensetzung des Glases in Abhängigkeit von der erforderlichen Verdichtungstemperatur ausgewählt wird. Bei Einsatz von vorgeformten Körpern können ebenfalls vorgefertigte Glaskapseln Verwendung finden. Die vorgeformten Körper können jedoch auch mit einer Glas- oder glasähnlichen Masse nach einem der bekannten Verfahren beschichtet werden, die anschliessend gasdicht geschmolzen wird. Beispiele für derartige Massen sind niedrigschmelzende Borosilicatgläser, Alumosilicatgläser, hochschmelzende, sogenannte Vycorgläser® (etwa 96% $SiO_2$ + 3% $B_2O_3$) und reines Kieselglas, die vorteilhaft in Form einer wässrigen Glaspulversuspension zusammen mit einem organischen Bindemittel, wie Polyvinylalkohol oder Stearinsäure durch übliche Massnahmen, wie Tauchen, Sprühen, Spritzen, Bürsten oder Streichen aufgetragen werden. Bei Einsatz von vorgeformten Körpern ist es ausserdem vorteilhaft, zwischen der Glasumhüllung und dem Körper eine Zwischenschicht anzubringen. Bei Verwendung von vorgefertigten Glaskapseln können als Zwischenschicht beispielsweise inerte Pulver, wie Bornitrid oder Folien, wie Graphitfolien Verwendung finden.

Wenn hingegen die Glasumhüllung durch Beschichtung mit einer Glas- oder glasähnlichen Masse erzeugt wird, hat sich die Verwendung von Zwischenschichten aus einem organischen Material, das bei Temperaturen bis zu etwa 400°C unter Normaldruck zersetzlich oder schmelzbar ist, wie einem organischen Wachs oder harzähnlichen Produkt oder aus einem hitzebeständigen Material, das auf mindestens die Hälfte seines Volumens komprimierbar ist, wie Fasern oder Filze aus Aluminiumoxid, Kohlenstoff, Graphit oder Bornitrid, gemäss dem in der DE-OS 30 09 240 (am 11.3. 1980 eingereicht), die der unter Art. 54 Absatz 3 EPÜ fallenden EP-A-81 101 706 entspricht, beschriebenen Verfahren, besonders bewährt.

Für die Durchführung des erfindungsgemässen Verfahrens werden die glasgehüllten Pulver oder Körper, nachdem die Glashülle vakuumdicht geschlossen worden ist, mit dem pulverförmigen Material in Berührung gebracht, das definitionsgemäss hitzebeständig und für das gasförmige Druckübertragungsmedium durchlässig sein muss.

Hierzu können die glasgehüllten Proben im Hochdruckautoklaven selbst in eine rieselfähige Schüttung aus dem pulverförmigen Marterial eingebettet werden, was beispielsweise dadurch bewerkstelligt werden kann, dass das pulverförmige Material lose über die glasgehüllten Proben angehäuft wird unter vollständiger Bedeckung derselben. Zur Sicherstellung der vollständigen Bedeckung kann die rieselfähige Schüttung auch in einem Behälter untergebracht werden, der den freien Durchgang des gasförmigen Druckübertragungsmediums nicht behindert. Da für die Stützung der Glashülle beim Erweichen nur die unmittelbar an der Glasoberfläche anliegenden Pulverteilchen wirksam werden können, muss das Pulver beim Komprimieren der Glashülle nachrutschen können, um sicherzustellen, dass während der Dauer des Heisspressvorgangs immer die gesamte Oberfläche der Glashülle mit dem Pulver in Berührung bleibt. Relativ grobkörnige Pulver mit Teilchengrössen von etwa 0,1 bis 3 mm, vorzugsweise 0,1 bis 1 mm, die auch bei erhöhter Temperatur gut rieselfähig bleiben, haben sich hierfür besonders bewährt.

Anstelle des Einbringens in die rieselfähige Schüttung kann auf die glasgehüllten Proben jedoch auch vor dem Einbringen in den Hochdruckautoklaven eine Schicht des pulverförmigen Materials in Form einer Suspension, z.B. in Wasser oder in einem organischen Lösungsmittel, wie Aceton oder einem aliphatischen Alkohol mit 1 bis 6 C-Atomen aufgetragen und anschliessend zu einer Schicht mit eine Dicke von 0,1 bis 3 mm, vorzugsweise 0,3 bis 1 mm getrocknet werden. Zur Erzielung einer guten Haftung der Pulverschicht kann die Glasoberfläche vor dem Auftragen der Suspension, z.B. durch Sandstrahlen, aufgerauht werden. Da bei dieser Anwendungsart kein Nachrutschen des Pulvers erforderlich ist, können hierfür feinere Pulver mit Teilchengrössen im Bereich von 0,5 bis 100 μm vorzugsweise 1 bis 30 μm Verwendung finden. Dann werden die so beschichteten glasgehüllten Proben in den Hochdruckautoklaven eingebracht.

Unabhängig davon, durch welche Massnahmen das In-Berührung-Bringen des pulverförmigen Materials mit den glasgehüllten Proben im einzelnen erreicht worden ist, kann dieses seine Funktion, nämlich die Versteifung der Glashülle von aussen bei der angewendeten Presstemperatur und damit die Verhinderung des Abfliessens der Glashülle bei geringer Viskosität, definitionsgemäss dadurch erfüllen, dass es während des Aufheizvorgangs beim isostatischen Heisspressen entweder in die Glasoberfläche eindringt oder mit dieser reagiert.

Unter pulverförmigen Materialien, die in die Oberfläche der Glashülle eindringen unter Versteifung derselben, sind solche zu verstehen, die bei der angewendeten Presstemperatur weder schmelzen, noch sintern und mit der Glashülle selbst nicht reagieren. Beispiele hierfür sind hochschmelzende Metalle, wie Molybdän, Wolfram und Tantal, intermetallische Verbindungen, wie Titandiborid, Graphit und nicht oxidische keramische Werkstoffe, wie Siliciumcarbid, Siliciumnitrid, Borcarbid und Bornitrid. Derartige Produkte können einzeln oder im Gemisch verwendet werden. Die Versteifung der Glashülle wird durch Einlagern der festen Pulverpartikel erreicht, die sich bei der angewendeten Presstemperatur inert verhalten, was etwa mit der verstärkenden Wirkung eines inerten Füllstoffs zu vergleichen ist. Da durch den Druck des gasförmigen Druckübertragungsmediums die Glashülle gleichzeitig fest an die zu verdichtenden Pulver oder vorgeformten Körper angepresst wird, ist ein Ablaufen der Glashülle nach innen ausgeschlossen und die gleichmässig dicke Hüllschicht bleibt erhalten.

Unter pulverförmigen Materialien, die mit der Oberfläche der Glashülle reagieren unter Versteifung deselben, sind solche zu verstehen, die sich über eine Schmelzphase mit der Glashülle verbinden unter Bildung einer Glasschmelze von mindestens gleicher oder höhere Viskosität als die Glashülle selbst. Beispiele hierfür sind oxidkeramische Werkstoffe, Glaspulver oder glasbildende Rohstoffe, einzeln oder im Gemisch. Die Auswahl dieser Pulver richtet sich nach der Erweichungstemperatur, bzw. der Viskosität bei der angewendeten Presstemperatur der Glashülle selbst. Das heisst, für Glashüllen mit niedriger Erweichungstemperatur, wie ein Natron-Kalk-Glas kann beispielsweise Aluminiumoxidpulver verwendet werden; weitere Beispiele für Pulver, die für Glashüllen mit niedriger Erweichungstemperatur verwendet werden können, sind Glaspulver aus Kieselglas, Alumosilicatglas, Borosilicatglas oder Pulver aus Oxiden, bzw. Oxidgemischen, die derartige Gläser bilden. Für Glashüllen mit hoher Erweichungstemperatur, wie Kieselglas können indessen nur Kieselglaspulver oder reines Siliciumdioxidpulver verwendet werden.

Bei Einsatz derartiger pulverförmiger Materialien, die mit der Oberfläche der Glashülle reagieren, werden die besten Ergebnisse durch Einbetten der glasgehüllten Proben in eine rieselfähige Schüttung des Pulvers erzielt. Dabei kann das gasförmige Druckübertragungsmedium in die Hohlräume der Schüttung eindringen unter direkter Drucküberragung auf die Glashülle. Beim Aufschmelzen des Pulvers geht zwar die Permeabilität der Schüttung verloren und es entsteht eine Glasschmelze, die von einer Vielzahl von Blasen durchsetzt ist, das heisst, es bildet sich eine Art Glasschaum, der in der Folge den Gasdruck auf die Glashülle überträgt. Hierbei ist es vorteilhaft, Druck und Temperatur getrennt zu regeln, das heisst, den Gasdruck erst beim Erweichen der Glashülle aufzubringen. Dadurch wird erreicht, dass der Gasinnendruck in den sich bildenden Blasen in dem Glasschaum etwa gleich dem Gasaussendruck ist und somit verhindert, dass die Blasen durch den hohen Aussendruck komprimiert werden und der Schaum vorzeitig zusammenfällt.

Unter Einhaltung dieser Bedingungen ist der gebildete Schaum im allgemeinen bis zu einer Viskosität der Glasschmelze von etwa $10^2$Pas stabil, diese verschmilzt mit der Glashülle, so dass die Versteifung der Glashülle, die üblicherweise bereits bei einer Viskosität von $10^6$Pas beginnt abzulaufen, durch die abstützende Wirkung des Glasschaumes erreicht wird.

Die Stabilität des gebildeten Glasschaurns ist abhängig von der Anzahl der gebildeten Blasen und deren Grösse, das heisst, je grösser die Anzahl der Blasen ist und je kleiner die Blasen sind, um so stabiler ist der Glasschaum. Dieses Ziel wird vorteilhaft durch Auswahl einer engen Teilchengrössenverteilung in der eingesetzten Pulverschüttung erreicht.

Nachdem die heissisostatische Verdichtung der glasgehüllten Proben beendet ist, ist es gleichfalls vorteilhaft, Druck und Temperatur getrennt zu regeln, das heisst, den Gasdruck erst dann abzubauen, wenn sich der Glasschaum verfestigt, was im allgemeinen bei einer Viskosität des Glases von etwa $10^{13}$Pas erfolgt. Dadurch kann erreicht werden, dass infolge des hohen Innendrucks der Blasen im Glasschaum dieser mitsamt der Glashülle abgesprengt wird, so dass der Aufwand für die Entformung der heissisostatisch verdichteten polykristallinen Körper sehr gering ist.

Mit Hilfe des erfindungsgemässen Verfahrens ist es somit erstmals möglich, pulverförmige Werkstoffe, die hohe Verdichtungstemperaturen von >1700°C erfordern, wie Siliciumnitrid oder insbesondere Siliciumcarbid, auf einfache Weise in einer hochschmelzenden Glashülle aus Kieselglas dem isostatischen Heisspressvorgang zu unterziehen unter Erzielung einer gleichmässigen Verdichtung der so erhaltenen polykristallinen Formkörper, unabhängig von deren Form und Grösse, was bisher im Falle von Siliciumcarbid mit Verdichtungstemperaturen von mindestens 1900°C überhaupt nicht möglich war, oder im Falle von Siliciumnitrid mit Verdichtungstemperaturen von mindestens 1750°C allenfalls durch aufwendige Massnahmen erreicht werden sollte.

Das erfindungsgemässe Verfahren eignet sich aber in gleicher Weise auch für pulverförmige Werkstoffe, die zur vollständigen Verdichtung weniger hohe Temperaturen benötigen, wie Titanborid oder Aluminiumoxid und die dementsprechend in Glashüllen mit niedrigerem Erweichungspunkt, die leichter bearbeitbar und auch preisgünstiger sind, isostatisch heiss verpresst werden können.

Das erfindungsgemässe Verfahren ist somit universell anwendbar, das heisst, die Versteifung der Glashüllen von aussen kann bei allen Glasarten erreicht werden, die bei der angewendeten Presstemperatur eine Viskosität von $>10^6$Pas aufweisen.

In den folgenden Beispielen wird das erfindungsgemässe Verfahren näher erläutert. Hierin bedeutet TD die theoretische Dichte.

Beispiel 1

a) Aus pulverförmigem $Al_2O_3$ mit 1 Gew.-% MgO als Sinterhilfsmittel wurden durch isostatisches Pressen bei Raumtemperatur Zylinder von 40 mm Durchmesser und 60 mm Höhe hergestellt; Dichte: 2,06 g/cm³ = 51,4% TD. Die Zylinder wurden in eine vorgeformte Hülle aus Alumosilicatglas (57,5 Gew.-% $SiO_2$, 20 Gew.-% $Al_2O_3$, 9 Gew.-% $B_2O_3$, 8 Gew.-% MgO, 5 Gew.-% CaO, 0,5 Gew.-% $Na_2O$) gegeben. Als Schicht zwischen Hülle und Zylinder wurde reines BN-Pulver (Teilchengrösse 40–100 μm) eingefüllt und die Hülle im Vakuum gasdicht verschlossen.

b) Ein nach a) hergestelter gehüllter Zylinder wurde in einen Graphittiegel gelegt, dessen Boden mit einer 5 mm hohen BN-Pulverschicht belegt war. Anschliessend wurde der Tiegel mit BN-Pulver aufgefüllt, so dass die gehüllte Probe vollständig bedeckt war. Das BN-Pulver wies eine Teilchengrösse von 0,1–0,5 mm auf. Der Tiegel wurde in den Hochdruckautoklaven gegeben und unter Vakuum innerhalb 30 Minuten bis 1000°C aufgeheizt. Anschliessend wurden gleichzeitig Temperatur und Argongasdruck gesteigert. Die Endtemperatur von 1550°C wurde bei einem Gasdruck von 1500 bar 2 Stunden gehalten. Danach wurden Druck und Temperatur gleichzeitig abgebaut, so dass bei 800 °C nur noch ein Gasdruck von 20 bar vorlag und die Anlage dann abgeschaltet. Der durch Sandstrahlen gereinigte Formkörper wies eine Dichte von 3,96 g/cm³ = ca. 99% TD auf.

c) Ein nach a) hergestelter gehüllter Zylinder wurde in einen Graphittiegel gelegt, dessen Boden mit einer etwa 5 mm hohen Schicht aus Kieselglaspulver belegt war. Anschliessend wurde der Tiegel mit Kieselglaspulver aufgefüllt, so dass die gehüllte Probe vollständig bedeckt war. Die Teilchengrösse des Kieselglaspulvers betrug 0,8–1 mm. Der Tiegel wurde in den Hochdruckautoklaven gegeben und unter Vakuum innerhalb 30 Minuten auf 1000°C aufgeheizt. Der Argongasdruck wurde bis zum Erreichen von 1300°C auf 1500 bar aufgebaut, anschliessend die Temperatur auf 1550°C gesteigert und 2 Stunden gehalten. Danach wurde die Anlage auf 800°C abgekühlt, erst dann der Restdruck abgelassen und die Anlage abgeschaltet. Der durch Sandstrahlen gereinigte Formkörper wies eine Dichte von 3,98 g/cm³ = ca. 99,5% TD auf.

Beispiel 2

a) Aus pulverförmigem alpha-SiC mit 1,5 Gew.-% Aluminium als Sinterhilfsmittel wurden durch isostatisches Pressen bei Raumtemperatur Würfel mit einer Kantenlänge von 40 mm und einer Dichte von 1,92 g/cm³ = 59,8% TD hergestellt. Die Würfel wurden in eine vorgeformte Hülle aus Kieselglas gegeben, die mit einer Zwischenschicht aus einer 1 mm starken Graphitfolie ausgelegt war und die Hülle im Vakuum gasdicht verschlossen.

b) Ein nach a) hergestellter gehüllter Würfel wurde in einen Graphittiegel gelegt, dessen Boden mit einer 5 mm hohen SiC-Pulverschicht belegt war. Anschliessend wurde der Tiegel mit SiC-Pulver aufgefüllt, so dass die gehüllte Probe vollständig bedeckt war. Die Teilchengrösse des SiC-Pulvers betrug 0,3 bis 0,6 mm. Der Tiegel wurde in den Hochdruckautoklaven gegeben und unter Vakuum innerhalb 40 Minuten auf 1300°C aufgeheizt. Anschliessend wurden gleichzeitig Temperatur und Argongasdruck gesteigert. Die Endtemperatur von 1900°C wurde bei einem Gasdruck von 2000 bar 3 Stunden lang gehalten. Danach wurden Druck und Temperatur gleichzeitig abgebaut, so dass bei 1300°C nur noch ein Gasdruck von 20 bar vorlag und die Anlage abgeschaltet. Der durch Sandstrahlen gereinigte Formkörper wies eine Dichte von 3,18 g/cm³ = ca. 99,1% TD auf.

c) Ein nach a) hergestellter gehüllter Würfel wurde in einen Graphittiegel gegeben, dessen Boden etwa 5 mm hoch mit einem Quarzsplitt bedeckt war. Anschliessend wurde der Tiegel mit Quarzsplitt aufgefüllt, so dass die gehüllte Probe vollständig bedeckt war. Die Teilchengrösse des Quarzsplittes betrug 0,5 bis 1 mm. Der Tiegel wurde in den Hochdruckautoklaven eingesetzt und unter Vakuum innerhalb 40 Minuten auf 1300°C aufgeheizt. Der Argongasdruck wurde bis zum Erreichen von 1600°C auf 2000 bar aufgebaut, anschliessend die Temperatur auf 1900°C gesteigert und 3 Stunden gehalten. Nach Abkühlen der Anlage auf 1200°C wurde der Restgasdruck abgelassen und die Anlage abgeschaltet. Der mit Sandstrahlen gereinigte Formkörper wies eine Dichte von 3,19 g/cm³ = ca. 99,4% TD auf.

### Beispiel 3

a) Aus pulverförmigem $Si_3N_4$ mit 3 Gew.-% MgO als Sinterhilfsmittel wurden durch isostatisches Pressen bei Raumtemperatur Zylinder von 30 mm Durchmesser und 70 mm Höhe hergestellt; Dichte: 1,98 g/cm³ = ca. 62% TD. Auf die Zylinder wurde eine erste Schicht aus Paraffinwachs von 1 mm Dicke durch Tauchen in die Wachsschmelze aufgebracht und darauf eine zweite, 1 mm starke Schicht aus einer Suspension eines °Vycor-Glaspulvers (97 Gew.-% $SiO_2$, 3 Gew.-% $B_2O_3$) aufgestrichen. In einem Kammerofen wurde anschliessend das Wachs durch die poröse Glaspulverhülle ausgeschmolzen.

b) Ein nach a) hergestellter Zylinder wurde in einen Graphittiegel gelegt, dessen Boden mit einer 5 mm hohen Schicht aus einem BN-SiC-Pulvergemisch belegt war. Anschliessend wurde der Tiegel mit dem BN-SiC-Pulvergemisch aufgefüllt, so dass der gehüllte Zylinder vollständig bedeckt war. Die Teilchengrösse des SiC-Pulvers betrug 0,3 bis 0,6 mm, die des BN-Pulvers 0,1 bis 0,5 mm. Das Pulver war im Verhältnis 1:1 gemischt. Der Tiegel wurde in den Hochdruckautoklaven gegeben und unter Vakuum innerhalb von 40 Minuten bis auf 1200 °C aufgeheizt. Nach einer Haltezeit von 2 Stunden zum Dichtschmelzen der Hülle wurden gleichzeitig Temperatur und Druck gesteigert. Bei 1750°C und 2000 bar wurde eine weitere Haltezeit von 4 Stunden eingelegt, danach wurden Druck und Temperatur gleichzeitig abgebaut, so dass bei 1050°C nur noch ein Gasdruck von 20 bar vorlag und die Anlage abgeschaltet. Der durch Sandstrahlen gereinigte Formkörper wies eine Dichte von 3,19 g/cm³ = ca. 100% TD auf.

c) Ein nach a) hergestellter Zylinder wurde in einen Graphittiegel gegeben, dessen Boden 5 mm hoch mit einem Kieselglaspulver belegt war. Anschliessend wurde der Tiegel mit Kieselglaspulver aufgefüllt, so dass die gehüllte Probe vollständig bedeckt war. Die Teilchengrösse des Kieselglaspulvers betrug 0,8 bis 1 mm. Der Tiegel wurde in den Hochdruckautoklaven eingesetzt und unter Vakuum innerhalb von 40 Minuten auf 1200°C aufgeheizt und 2 Stunden gehalten. Der Argongasdruck wurde bis zum Erreichen von 1300°C auf 2000 bar aufgebaut, anschliessend die Temperatur auf 1750°C gesteigert und 2 Stunden gehalten. Nach Abkühlung der Anlage auf 1050°C wurde der Restdruck abgelassen und die Anlage abgeschaltet. Der durch Sandstrahlen gereinigte Formkörper wies eine Dichte von 3,18 g/cm³ = ca. 99,7% TD auf.

### Beispiel 4

In ein einseitig geschlossenes Rohr aus Vycor®-Glas, welches mit einer 1 mm starken Graphitfolie ausgelegt war, wurde ein $TiB_2$-Pulver ohne Zusätze eingefüllt, mit Graphitfolie abgedeckt und die Hülle im Vakuum gasdicht verschlossen. Die Innenabmessungen des Glasrohres waren 50 mm Durchmesser und 250 mm Länge. Die äussere Oberfläche der Glashülle wurde durch Sandstrahlen aufgerauht und eine ca. 0,3 mm starke $TiB_2$-Schicht auf einer Aufschlämmung von $TiB_2$-Pulver mit Aceton aufgespritzt. Die Teilchengrösse des $TiB_2$-Pulvers war 20 μm und feiner. Die Probe wurde in einem Graphitrohr in den Hochdruckautoklaven eingesetzt und unter Vakuum bis 1200°C aufgeheizt. Anschliessend wurden gleichzeitig Temperatur und Argongasdruck gesteigert, so dass bei 1700°C ein Druck von 2000 bar vorlag. Nach 2 Stunden Haltezeit wurden Druck und Temperatur bis auf 1050°C und 20 bar Gasdruck abgebaut und die Anlage abgeschaltet. Der durch Sandstrahlen gereinigte Stab wies eine Dichte von 4,46 g/cm³ = ca. 99,1% TD auf.

### Patentansprüche

1. Verfahren zur Herstellung von praktisch porenfreien, polykristallinen Formkörpern aus pulverförmigem Material oder aus vorgeformten Körpern mit zur Oberfläche offenen Poren, in einer vakuumdicht geschlossenen Glashülle, durch isostatisches Heisspressen im Hochdruckautoklaven unter Verwendung eines inerten Gases als Druckübertragungsmedium, dadurch gekennzeichnet, dass die glasgehüllten Pulver oder Körper mit einem für das gasförmige Druckübertragungsmedium durchlässigen, hitzebeständigen, pulverförmigen Material in Berührung gebracht werden, das beim Erweichen der Glashülle während des Aufheizvorgangs beim isostatischen Heisspressen in die Glasoberfläche eindringt oder mit dieser reagiert unter Versteifung der Glashülle von aussen bei der angewendeten Presstemperatur.

2. Verfahren nach Anspruch 1, dadurch gekennzeichnet, dass die glasgehüllten Pulver oder Körper in eine rieselfähige Schüttung aus dem pulverförmigen Material eingebettet werden.

3. Verfahren nach Anspruch 1, dadurch gekennzeichnet, dass auf die glasgehüllten Pulver oder Körper eine Schicht des pulverförmigen Materials in Suspensionsform aufgetragen und getrocknet wird.

4. Verfahren nach Anspruch 1, dadurch gekennzeichnet, dass ein pulverförmiges Material verwendet wird, das mit der Glashülle bei der angewendeten Presstemperatur nicht reagiert.

5. Verfahren nach Anspruch 4, dadurch gekennzeichnet, dass als pulverförmiges Material hochschmelzende Metalle, intermetallische Verbindungen, Graphit oder nicht oxidische keramische Werkstoffe, einzeln oder im Gemisch, verwendet werden.

6. Verfahren nach Anspruch 1, dadurch gekennzeichnet, dass ein pulverförmiges Material verwendet wird, das mit der Glashülle bei der angewendeten Presstemperatur reagiert unter Bildung einer Glasschmelze von mindestens gleicher oder höherer Viskosität als die Glashülle selbst.

7. Verfahren nach Anspruch 6, dadurch gekennzeichnet, dass als pulverförmiges Material oxidische keramische Werkstoffe, Glaspulver oder glasbildende Rohstoffe, einzeln oder im Gemisch, verwendet werden.

## Claims

1. Process for the manufacture of substantially porefree shaped polycrystalline articles from pulverulent material or from articles preformed therefrom that have pores open towards the surface, in a vacuum-tight sealed glass casing, by isostatic hot-pressing in a high-pressure autoclave using an inert gas as pressure-transfer medium, characterised in that the glass-encased powders or articles are brought into contact with a heat-resistant pulverulent material that is permeable to the pressure-transfer medium and that penetrates into the surface of the glass or reacts with it when the glass casing softens during the heating-up operation in the isostatic hot-pressing process, with the result that the glass casing is reinforced from the outside at the pressing temperature employed.

2. Process according to claim 1, characterised in that the glass-encased powders or articles are embedded in a flowable heap of the pulverulent material.

3. Process according to claim 1, characterised in that a layer of the pulverulent material in the form of a suspension is applied to the glass-encased powders or articles and dried.

4. Process according to claim 1, characterised in that a pulverulent material that does not rect with the glass casing at the pressing temperature employed is used.

5. Process according to claim 4, characterised in that high-melting metals, intermetallic compounds, graphite or non-oxidic ceramic materials, individually or in admixture, are used as the pulverulent material.

6. Process according to claim 1, characterised in that a pulverulent material is used that reacts with the glass casing at the pressing temperature employed to form a glass melt of at least the same viscosity as, or of a higher viscosity than, that of the actual glass casing.

7. Process according to claim 6, characterised in that oxidic ceramic materials, glass powders or glass-forming raw materials, individually or in admixture, are used as the pulverulent material.

## Revendications

1. Procédé de fabrication de pièces moulées polycristallines, pratiquement sans pores, à partir d'un matériau en poudre ou de pièces précomprimées à pores superficiels ouverts, dans une gaine de verre fermée d'une manière étanche au vide, par compression isostatique à chaud en autoclave haute pression en utilisant un gaz inerte en tant que fluide de transfert de pression, caractérisé en ce que la poudre ou les pièces gainées de verre sont mises en contact avec un matériau en poudre, stable à haute température, perméable au fluide gazeux de transfert de pression, matériau qui, lors du ramollissement de la gaine de verre, pénètre pendant la montée en température, lors de la compression isostatique à chaud, dans la surface du verre ou réagit avec cette dernière, avec rigidification de la gaine de verre à partir de l'extérieur, à la température de compression utilisée.

2. Procédé selon la revendication 1, caractérisé en ce que la poudre ou les pièces gainées de verre sont noyées dans un déversement, en écoulement libre, du matériau en poudre.

3. Procédé selon la revendication 1, caractérisé en ce qu'une couche du matériau en poudre, sous la forme d'une suspension, est appliquée sur la poudre ou les pièces gainées de verre, puis séchée.

4. Procédé selon la revendication 1, caractérisé en ce qu'il utilise un matériau en poudre qui ne réagit pas avec la gaine de verre à la température de compression utilisée.

5. Procédé selon la revendication 4, caractérisé en ce qu'il. utilise en tant que matériau en poudre des métaux à point de fusion élevé, des composés intermétalliques, du graphite ou des matériaux céramiques non-oxydes, seuls ou en mélange.

6. Procédé selon la revendication 1, caractérisé en ce qu'il utilise un matériau en poudre qui réagit avec la gaine de verre, à la température de compression utilisée, avec formation d'une fonte de verre ayant une viscosité au moins égale ou supérieure à celle de la gaine de verre proprement dite.

7. Procédé selon la revendication 6, caractérisé en ce qu'il utilise en tant que matériau en poudre des matériaux céramiques du type oxyde, de la poudre de verre ou des matières premières vitrifiables, seuls ou en mélange.